# EUROPÄISCHE PATENTSCHRIFT

(11) **EP 3 378 301 B1**
(45) Veröffentlichungstag und Bekanntmachung des Hinweises auf die Patenterteilung: **01.01.2020**
(21) Anmeldenummer: 17162633.6
(22) Anmeldetag: 23.03.2017
(51) Int. Cl.: A01C 7/08, F16L 37/098, F16L 33/24, F16L 55/11

(54) **LANDWIRTSCHAFTLICHE VERTEILMASCHINE UMFASSEND EINE SCHLAUCHANSCHLUSSVORRICHTUNG FÜR EIN SYSTEM ZUM TRANSPORTIEREN EINES GASSTROMS**
AGRICULTURAL DISTRIBUTOR COMPRISING A HOSE CONNECTING DEVICE FOR A SYSTEM FOR TRANSPORTING A GAS STREAM
ÉPANDEUR AGRICOLE CONTENU UN DISPOSITIF DE RACCORDEMENT DE TUYAU POUR UN SYSTÈME DE TRANSPORT D'UN FLUX GAZEUX

(43) Veröffentlichungstag der Anmeldung: 26.09.2018
(73) Patentinhaber: Kverneland AS, 4353 Klepp Stasjon (NO)
(72) Erfinder: Ekert, Michael, 59427 Unna (DE); Diepenbrock, Felix, 48317 Drensteinfurt (DE)
(74) Vertreter: Bittner, Thomas L.

(56) Entgegenhaltungen:
- EP-A1- 0 924 453
- WO-A1-2007/088134
- WO-A1-2015/001253
- DE-A1-102004 050 796
- DE-A1-102014 102 247
- FR-A1- 2 863 683

## Beschreibung

Die Erfindung betrifft eine landwirtschaftliche Verteilmaschine.

### Hintergrund

Systeme zum Transportieren von Gasströmen können in verschiedenen Anwendungen genutzt werden. In einem Beispiel kann mit dem Gasstrom ein granuliertes oder gekörntes Material transportiert werden, beispielsweise um solches Material von einer Materialquelle oder einem Materialcontainer weg zu einem Austrag zu transportieren, zum Beispiel zu einer Ausbring- oder Verteilöffnung. Bei dem Material kann es sich im Fall einer landwirtschaftlichen Maschine beispielsweise um Dünger oder Saatgut handeln. Bei diesen oder anderen Anwendungen wird das Material in einem Gasstrom transportiert, beispielsweise einem Luftstrom, welcher eine oder mehrere Schlauchleitungen des Systems zum Transportieren des Materials durchströmt, um in dem Gasstrom das granulierte oder gekörnte Material zu transportieren.

Aus dem Dokument DE 10 2014 102 247 A1 ist ein Schlauchstecksystem einer landwirtschaftlichen Verteilmaschine bekannt, bei dem ein Ende einer Schlauchleitung mit einer Außenhülse versehen ist, die in eine Stecköffnung einsteckbar ist, um die Außenhülse gegen axiale Beweglichkeit in Bezug auf die Stecköffnung zu arretieren.

Im Dokument DE 10 2004 050 796 A1 ist eine Schlauchanschlussvorrichtung mit einem axial steckbaren Anschlussteil und mit mindestens einem Rastelement bekannt, das zum radialen Einrasten in eine korrespondierende Ausnehmung vorgesehen ist. Es ist vorgeschlagen, dass die Schlauchanschlussvorrichtung zumindest eine schräge Umlenkfläche zum Umlenken einer in Umfangsrichtung gerichteten Kraft in eine radiale Kraft auf das das Rastelelement aufweist.

Das Dokument WO 2007 / 088134 A1 offenbart einen Saugschlauch, insbesondere für einen Staubsauger, mit Kupplungselementen zum lösbaren Anschluss an einen Saugstutzen oder an ein Handgriffrohr, wobei das anzukuppelnde Schlauchende des Saugschlauches mit einer festgesetzten Lagerhülse versehen und in einer Aufnahme des Saugstutzens oder des Handgriffsrohres drehbar einsetzbar ist sowie mit einem auf dem Saugschlauch angeordneten Kupplungsring mit abfedernden radialen Rastnocken, die in zugeordneten Vertiefungen oder Durchbrüche der Aufnahme lösbar eingreifen, dadurch gekennzeichnet, dass die radialen Rastnocken in Umfangsrichtung des Kupplungsrings wenigstens einseitig radial rückfedernd auslenkbar ausgebildet sind.

### Zusammenfassung

Aufgabe der Erfindung ist es, eine landwirtschaftliche Maschine anzugeben, mit der der Anschluss einer Schlauchleitung zeit- und aufwandssparend ermöglicht ist.

Zur Lösung ist eine landwirtschaftliche Verteilmaschine nach dem unabhängigen Anspruch 1 geschaffen. Ausgestaltungen sind Gegenstand von abhängigen Unteransprüchen.

Das proximale Endstück kann in die Stecköffnung formschlüssig einsteckbar sein. Bei dieser oder anderen Ausführungsformen kann das proximale Endstück bis zu einem Anschlag in die Stecköffnung einsteckbar sein, wobei der Anschlag an dem Einsteckbauteil ausgebildet ist, beispielsweise als ein radialer Vorsprung.

Das proximale Endstück kann eine weitere federnde Zunge mit einem weiteren Rastvorsprung aufweisen, wobei der weitere Rastvorsprung in der Kopplungsstellung den Rand im Bereich des gegenüberliegenden der ersten Randabschnitte hintergreift, und die weitere federnde Zunge in der Entkopplungsstellung nach Innen gedrückt ist, derart, dass der weitere Rastvorsprung zumindest teilweise auf der der zylindrischen Stecköffnung zugewandten Innenfläche der umgebenden Wandung im Bereich benachbart zu dem gegenüberliegenden zweiten Randabschnitten angeordnet und gegen die innenfläche vorgespannt ist.

Die federnde Zunge und die weitere federnde Zunge können hinsichtlich einzelner konstruktiver Merkmale verschieden ausgeführt sein. Alternativ weisen die federnde Zunge sowie die weitere federnde Zunge die gleiche Ausbildung auf, insbesondere hinsichtlich der äußeren Formgebung. Bei dieser oder anderen Ausführungsformen können der Rastvorsprung und / oder der weitere Rastvorsprung als radial nach außen gerichteter Vorsprung an der zugeordneten federnden Zunge gebildet sein.

In den verschiedenen Ausführungsformen können der Rastvorsprung und / oder der weitere Rastvorsprung in der jeweiligen Raststellung formschlüssig auf dem Rand der die Stecköffnung umgebenden Wandung angeordnet sein. Hierbei kann ein äußerer Rand des jeweiligen Rastvorsprungs mit einer gekrümmten Oberfläche ausgebildet sein, die formschlüssig auf einer gegenüberliegenden Oberfläche des sattelartigen Rands aufliegt.

Es ist ein Rampenmechanismus mit einander zugeordneten Rampen an der Steckaufnahme und dem Einsteckbauteil vorgesehen, bei dem die Rampen zumindest beim mittels Relativdrehung von Steckaufnahme und Einsteckbauteil um eine Drehachse bewirkten Übergang von der Kopplungsstellung in die Nicht-Kopplungsstellung aufeinander gleiten und hierdurch Steckaufnahme und Einsteckbauteil in axialer Richtung der Drehachse auseinander bewegt werden. Der Rampenmechanismus erzwingt bei der Relativdrehung von Steckaufnahme und Einsteckbauteil eine axiale Relativbewegung, die dazu führt, dass Steckaufnahme und Einsteckbauteil auseinander bewegt werden. Dieses Auseinanderbewegen überlagert sich mit dem Übergang des Rastvorsprungs und / oder des weiteren Rastvorsprungs aus der Raststellung in die Nicht-Raststellung. Mit dem Rampenmechanismus kann ein Anschlag für die Relativdrehung von Steckaufnahme und Einsteckbauteil gebildet sein.

Die Rampen können an einem Rampenvorsprung und einer Rampenausnehmung gebildet sein. Rampenvorsprung und Rampenausnehmung können im Bereich der jeweiligen Rampe mit gleicher Schräglage ausgebildet sein.

Die Rampen können im Bereich äußerer Oberflächen von Steckaufnahme und Einsteckbauteil angeordnet sein.

Die Rampe kann an dem Einsteckbauteil im Bereich eines sich radial erstreckenden Überstands angeordnet sein.

Es kann ein weiterer Rampenmechanismus mit einander zugeordneten weiteren Rampen an der Steckaufnahme und dem Einsteckbauteil vorgesehen sein, welcher auf einer gegenüberliegenden Seite von Steckaufnahme und Einsteckbauteil angeordnet ist.

Die die Stecköffnung umgebenden Wandung kann an ein Anschlussbauteil, insbesondere einer Anschlussplatte, angeformt sein, dessen Fläche sich quer zur Längsrichtung des Einsteckbauteils erstreckt, und der Rand kann auf einer von dem Einsteckbauteil abgewandten Seite des Anschlussbauteils ausgebildet sein. Die die Stecköffnung umgebende Wandung kann an das Anschlussbauteil, zum Beispiel die Anschlussplatte, einstückig angeformt sein. Die umgebende Wandung kann auf dem Anschlussbauteil abgestützt sein. Das Anschlussbauteil kann ein oder mehrere Durchbrüche zum Aufnehmen von Befestigungsmitteln aufweisen, beispielsweise von Schrauben. In einer Ausführungsform kann das Anschlussbauteil einstückig mit einem Verteilerbauteil des Transportsystems gebildet sein, beispielsweise einem Rohrabschnitt eines Transportrohres in dem System zum Transportieren des Gasstroms, welcher ein granuliertes, partikalhaltiges oder gekörntes Material enthalten kann. Das Transportrohr kann beispielsweise als Element eines Verteilers für das Material gebildet sein.

Das Anschlussbauteil kann auf einer von dem Einsteckbauteil abgewandten Seite eine gekrümmte Oberfläche aufweisen, die um eine sich quer zur Längsrichtung des Einsteckbauteils erstreckende Achse gekrümmt ist. Mithilfe der Krümmung kann die Sattelform des Rands zumindest teilweise ausgebildet sein.

Die die Stecköffnung umgebende Wandung kann auf der von dem Einsteckbauteil abgewandten Seite des Anschlussbauteils wenigstens abschnittsweise überstehen und hierdurch der Rand zumindest teilweise durch einen Wandüberstand ausgebildet sein.

Das Einsteckbauteil kann am distalen Endstück innenseitig ein Schraubgewinde aufweisen, in welches das Schlauchende eingedreht sein. Das Schraubgewinde kann zum proximalen Endstück hin mit abnehmendem lichten Durchmesser innerhalb des Schraubgewindes konisch ausgebildet sein. Die konische Ausbildung kann eine konische Ausführung des lichten Durchmessers des Schraubgewindes selbst auf einem zylindrischen Innenwandabschnitt mit gleichbleibendem Durchmesser vorsehen. Alternativ oder ergänzend kann der Innenwandabschnitt des Einsteckbauteils, auf dem das Schraubgewinde angeordnet ist, selbst konisch zulaufen. Bei dem konischen Abschnitt kann der innere Durchmesser des distalen Endstücks zum proximalen Endstück hin abnehmen. Die konische Ausbildung kann mit einem Winkel von etwa 1 bis etwa 10 Grad gebildet sein, zum Beispiel etwa 1 oder etwa 2 Grad.

Die federnde Zunge und / oder die weitere federnde Zunge können von in Längsrichtung des Einsteckbauteils verlaufenden Schlitzen begrenzt sein, welche die federnde Zunge und / oder die weitere federnde Zunge von benachbarten Abschnitten des proximalen Endstücks trennen.

Die Rastvorsprung und / oder der weitere Rastvorsprung kann in Längsrichtung des Einsteckbauteils gegenüber den benachbarten Abschnitten des proximalen Endstücks überstehen.

Die Stecköffnung kann als eine zylindrische Öffnung oder ein zylindrischer Durchbruch ausgeführt sein. Der Querschnitt der Stecköffnung kann rund sein.

In der Kopplungsstellung ist das Einsteckbauteil in der Stecköffnung gegen unbeabsichtigtes Herausgleiten oder -ziehen gesichert. Demgegenüber kann das Einsteckbauteil in der Entkopplungsstellung aus der Stecköffnung herausgezogen werden, ohne dass dieses durch die Raststellung des Rastvorsprungs der federnden Zunge behindert ist.

Das proximale und das distale Endstück des Einsteckbauteils können unterschiedliche Außendurchmesser aufweisen. Beispielsweise kann das distale Endstück einen größeren Außendurchmesser als das proximale Endstück aufweisen. Mithilfe unterschiedlicher Außendurchmesser des distalen Endstücks kann das Einsteckbauteil an unterschiedliche Schlauchdurchmesser angepasst werden.

Eine Wandung des elastischen, formstabilen Schlauchs kann mit spiralförmigen Elementen ausgebildet sein, insbesondere einer Außenwandung der Schlauchleitung. Die spiraiförmigen Elemente, bei denen es sich beispielweise um Draht handeln kann, können sich beim Befestigen des Schlauchendes an dem Einsteckbauteil in das innenseitige Schraubgewinde des distalen Endstücks einschrauben.

Das Transportsystem kann bei der landwirtschaftlichen Maschine dazu dienen, den Gaststrom, insbesondere einen Luftstrom, oder einen Gasstrom mit granuliertem, partikelhaltigem oder gekörntem Material zu transportieren. Beispielweise kann bei einer Sämaschine ein Luftstrom zum Säherz hin oder von diesem weg transportiert werden, um den Luftstrom dort zum Vereinzeln der Saatkörner zu nutzen. Alternativ oder ergänzend kann bei der Sämaschine ein Luftstrom genutzt werden, um die Saatkörner durch das Transportsystem zu transportieren.

Das Ausbilden der Verbindung zwischen Schlauchleitung und Einsteckbauteil sowie zwischen Einsteckbauteil und Steckaufnahme können jeweils im Wesentlichen gasdicht, insbesondere luftdicht ausgeführt sein. Hierzu können bei der Verbindung zwischen Schlauchleitung und Einsteckbauteil die konische Ausbildung des Schraubgewindes und / oder die konische Ausbildung des Innendurchmessers der Wandung im distalen Endstück beitragen. Bei der Verbindung zwischen Einsteckbauteil und Steckaufnahme kann zu diesem Zweck ein beispielweise als O-Ring ausgeführtes Dichtelement vorgesehen sein. Der O-Ring kann in einer umlaufenden Nut angeordnet sein, zum Beispiel im Bereich des proximalen Endstücks des Einsteckbauteils. Das Dichtelement kann zwischen einander gegenüberliegenden Wandabschnitten an dem Einsteckbauteil einerseits und der Steckaufnahme andererseits angeordnet sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung eines Verteilers für eine landwirtschaftliche Verteilmaschine zum Ausbringen von granuliertem oder körnigem Material wie Dünger oder Saatgut;
- Fig. 2: eine perspektivische Darstellung einer Anordnung für eine Schiauchanschlussvorrichtung mit einer Schlauchleitung, einem Einsteckbauteil und einer zugeordneten Steckaufnahme, bei der eine Stecköffnung innerhalb einer umgebenden Wandung gebildet ist;
- Fig. 3: eine perspektivische Darstellung einer Anordnung vergleichbar Fig. 2, wobei das Einsteckbauteil für eine Schlauchleitung mit geringerem Außendurchmesser angepasst ist;
- Fig. 4: eine perspektivische Darstellung des Einsteckbauteils aus Fig. 3;
- Fig. 5: eine perspektivische Darstellung der Anordnung aus Fig. 2, wobei ein Ende der Schlauchleitung an dem Einsteckbauteil montiert ist, welches seinerseits in die Steckaufnahme eingesteckt ist;
- Fig. 6: eine weitere Darstellung der Anordnung aus Fig. 5 von der Seite;
- Fig. 7: eine perspektivische Darstellung der Anordnung aus Fig. 2, wobei ein Ende der Schlauchleitung an dem Einsteckbauteil montiert ist, welches seinerseits in die Steckaufnahme eingesteckt ist;
- Fig. 8: eine weitere Darstellung der Anordnung aus Fig. 7 von der Seite;
- Fig. 9: eine Schnittdarstellung der Anordnung aus den Fig. 5 und 6:
- Fig. 10: eine weitere Schnittdarstellung der Anordnung aus den Fig. 5 und 6;
- Fig. 11: eine weitere perspektivische Darstellung der Anordnung aus den Fig. 5 und 6 und
- Fig. 12: eine perspektivische Darstellung eines Blindstopfens.

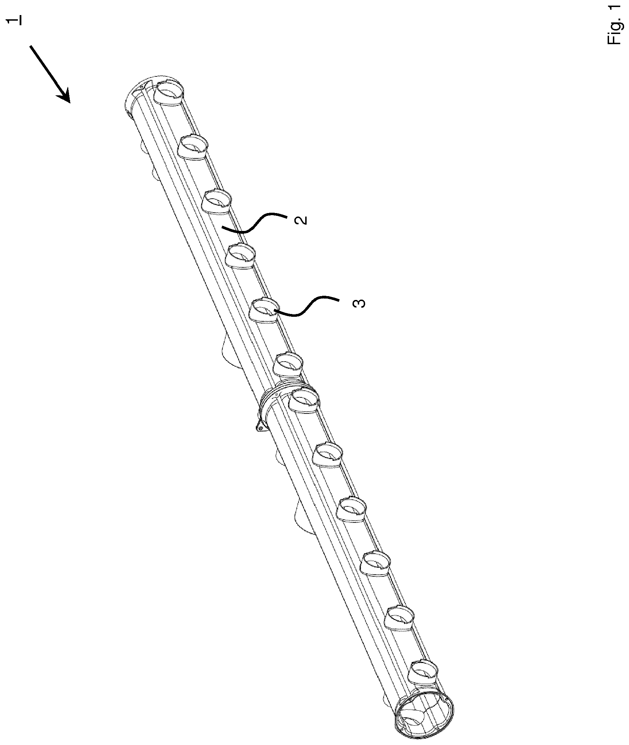

Fig. 1 zeigt eine schematische perspektivische Darstellung eines Verteiler 1 für ein Transportsystem zum Transportieren eines Gasstroms, insbesondere Luftstrom, weicher wahlweise zum Transportieren eines granulierten, partikelhaltigen oder gekörnten Materials dient, beispielsweise Dünger oder Saatgut.

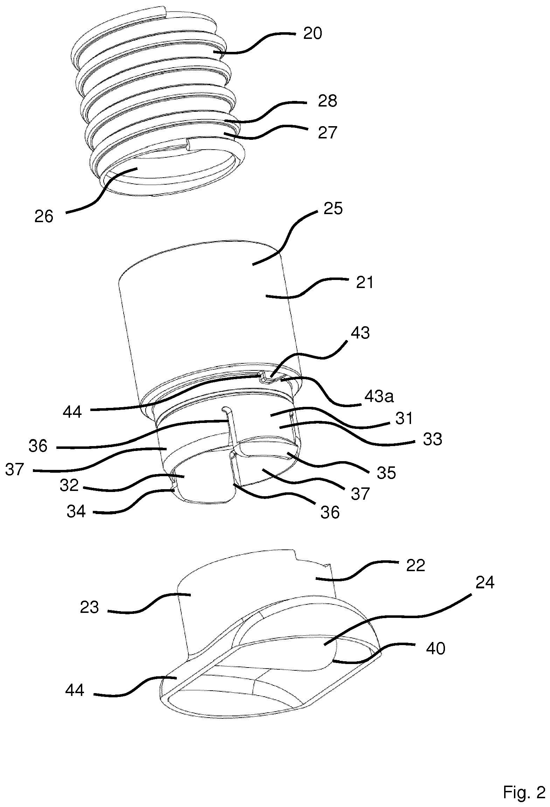

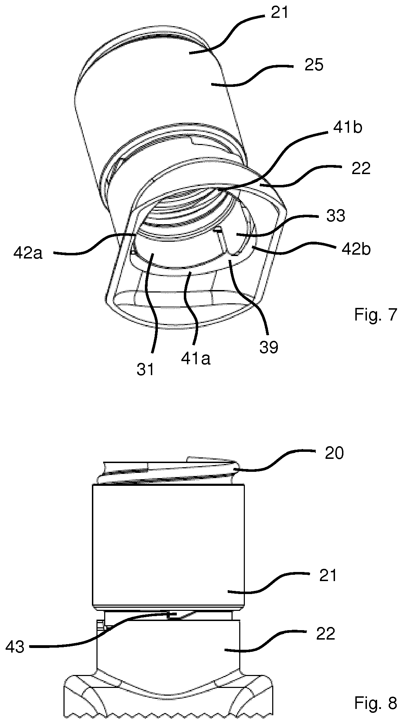

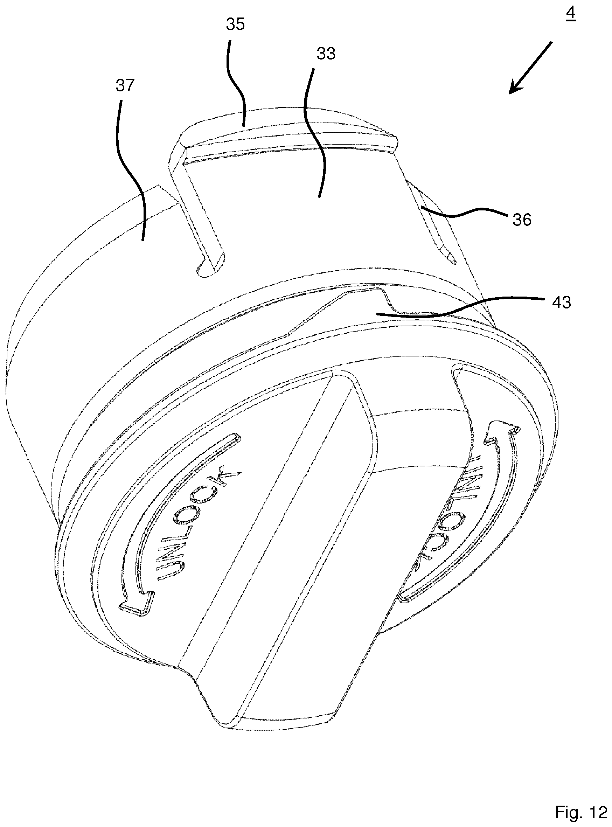

Der Verteiler 1 weist ein Verteilrohr 2 auf, an dem mehrere Ausgänge 3 gebildet sind, über die das zu transportierende Material aus dem Verteilrohr 2 in eine jeweils anzuschließende Schlauchleitung (nicht dargestellt) ausgebracht werden kann, über welche dann der Weitertransport des Gasstroms, wahlweise mit dem Material, erfolgt, beispielsweise zu einem Säherz einer Sämaschine oder einer Verteileinrichtung eines Düngerstreuers. Alternativ können Ausgänge 3 mit einem Blindstopfen 4 versehen wie er in Fig. 12 gezeigt ist. Die Anbindung einer jeweiligen Schlauchleitung erfolgt mithilfe einer Schlauchanschlussvorrichtung, wie dies nachfolgend unter Bezugnahme auf die Fig. 2 bis 10 anhand von Ausführungsbeispielen erläutert wird.

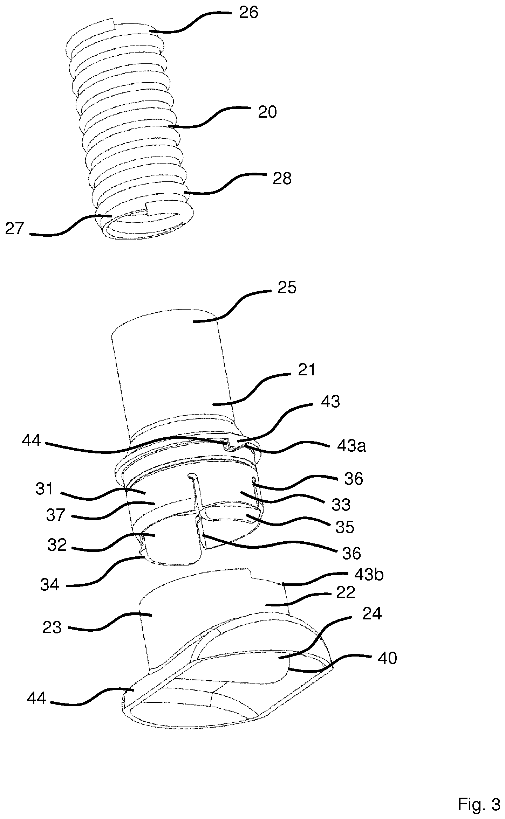

Die Fig. 2 und 3 zeigen perspektivische Darstellungen einer jeweiligen Anordnung mit einem Abschnitt einer Schlauchleitung 20, einem Einsteckbauteil 21 sowie einer Steckaufnahme 22, an der innerhalb einer umgebenden Wandung 23 eine Stecköffnung 24 gebildet ist. Die Ausführungsformen in den Fig. 2 und 3 unterscheiden sich insbesondere dadurch, dass die Schlauchleitung 21 mit unterschiedlichen Durchmessern bereitgestellt ist, weshalb ein distales Endstück 25 des Einsteckbauteils 21 in seinem Durchmesser hieran angepasst ist.

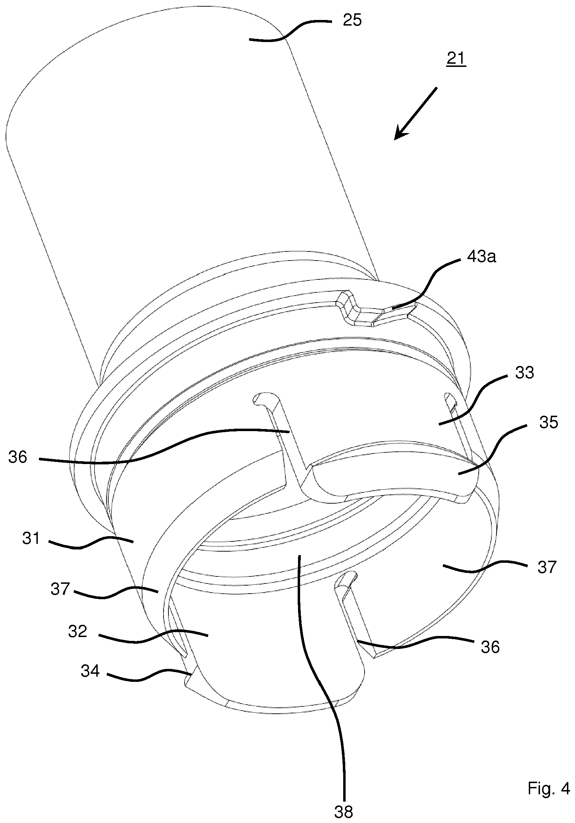

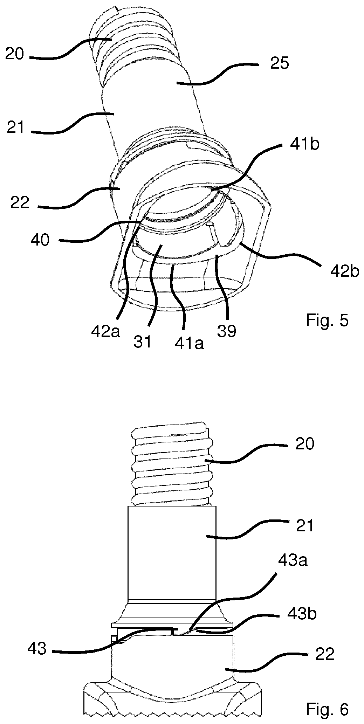

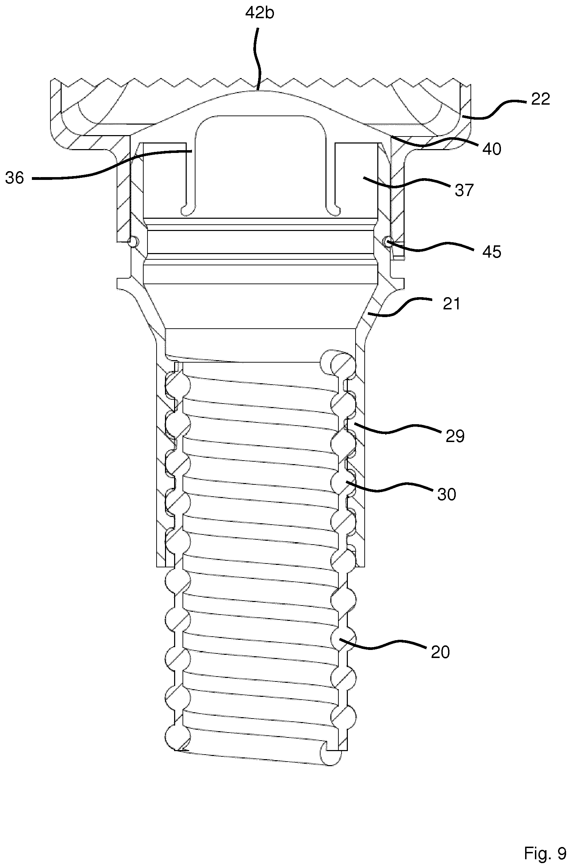

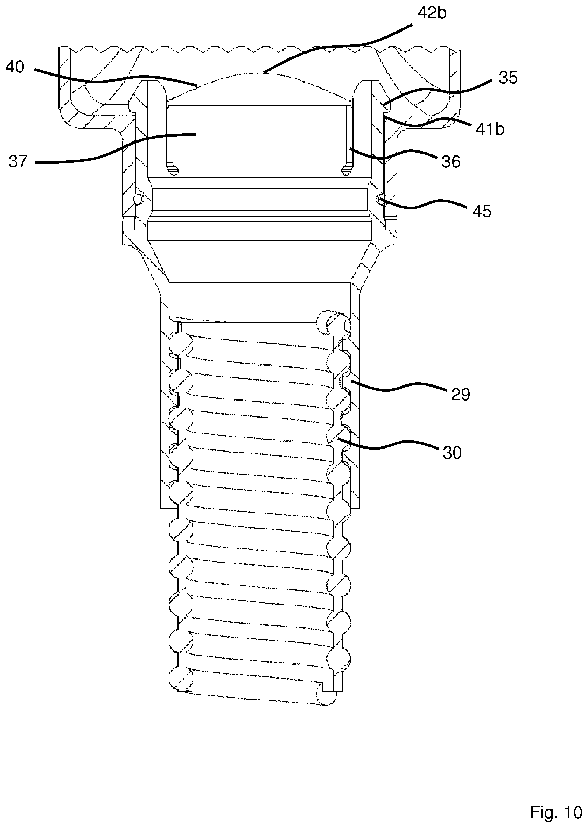

Die Fig. 5 und 6 sowie 7 und 8 zeigen Darstellungen für die Anordnung aus den Fig. 2 und 3, im zusammengebauten Zustand, ohne das ein Einrasten erfolgt ist. Fig. 4 zeigt eine weitere perspektivische Darstellung des Einsteckbauteils 21 in der Ausführung aus Fig. 3. Die Fig. 9 und 10 zeigen jeweils eine Querschnittsdarstellung der Anordnung aus den Fig. 5 und 6.

Die Schlauchleitung 20 ist bei den gezeigten Ausführungsformen von einem elastischen, formstabilen Schlauch 26 gebildet, in dessen Wandung 27 ein spiralförmiges Element 28 eingebunden ist, beispielsweise in Form eines Spiraldrahts. Gemäß den Fig. 9 und 10 weist das Einsteckbauteil 21 in dem distalen Endstück 25 innenseitig ein Schraubgewinde 29 auf, in welches sich das spiralförmige Element 28 eindreht, wenn ein Schlauchende 30 an dem Einsteckbauteil 21 montiert wird (vgl. Fig. 5 bis 8).

Beim Montieren des Einsteckbauteils 21 in der Steckaufnahme 22 wird ein proximales Endstück 31 des Einsteckbauteils 21 in die Stecköffnung 24 eingesteckt.

Das Schraubgewinde 29 ist in einem konisch geformten Abschnitt des distalen Endstücks 25 angeordnet. D.h. der Durchmesser des Schraubgewindes 29 verringert sich zum proximalen Endstück 31 hin. Hierdurch wird der eingeschraubte Schlauch zum Ende des Schraubgewindes 29 hin enger umfasst und gewährleistet somit einen im Wesentlichen gasdichten, insbesondere luftdichten Verbund zwischen Schlauchleitung 20 und Einsteckbauteil 21. Außerdem trägt die konische Ausformung dazu bei, dass sich die Schlauchleitung 20 durch Vibrationen nicht lockert.

Das proximale Endstück 31 des Einsteckbauteils 21 weist elastisch federnde Zungen 32, 33 auf, an denen endseitig ein jeweiliger Rastvorsprung 34, 35 angeordnet ist, der radial nach außen vorsteht. Die federnden Zungen 32, 33 werden im Bereich des proximalen Endstücks 31 von Schlitzen 36 begrenzt, die die federnden Zungen 32, 33 von benachbarten Abschnitten 37 im Bereich des proximalen Endstücks 31 trennen. Die Schlitze 36 ermöglichen es den federnden Zungen 32, 33 elastisch nach innen hin zu einem Durchbruch 38 des Einsteckbauteils 31 gedrückt zu werden, wenn das proximale Endstück 31 in die Stecköffnung 24 eingesteckt wird. Hierbei gleiten die Rastvorsprünge 34, 35 auf einer Innenfläche 39 der umgebenden Wandung 23 bis diese in den Bereich eines Rands 40 der Stecköffnung 24 gelangen.

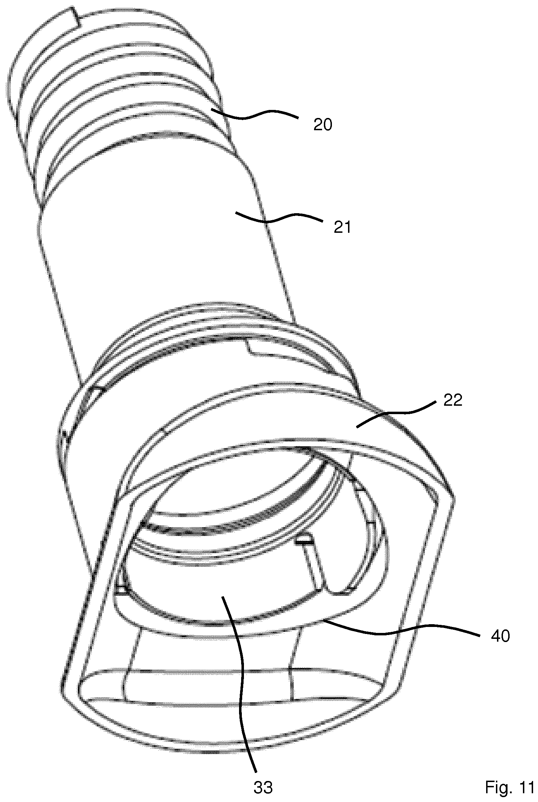

Der Rand 40 ist mit einer Sattelform gebildet, derart, dass Rasterrandabschnitte 41a, 41b, die sich entlang einer ersten gedachten, die Stecköffnung 24 kreuzenden Verbindungslinie gegenüberliegen, zurückversetzt sind gegenüber zweiten Randabschnitten 42a, 42b, die sich entlang einer zweiten gedachten, die Stecköffnung 24 kreuzenden Verbindungslinie, welche quer zur ersten gedachten Verbindungslinie verläuft, gegenüberliegen. Mittels Drehen des Einsteckbauteils 21 in der Einstecköffnung 24 gelangen die Rastvorsprünge 34, 35 in den Bereich der ersten Randabschnitte 41a, 41b, sodass die Rastvorsprünge 34, 35 dort den Rand 40 hintergreifen können, um eine Kopplungsstellung auszubilden, in welcher das Einsteckbauteil 21 gegen ein Herausziehen aus der Stecköffnung 24 und somit aus der Steckaufnahme 22 gesichert ist. Dieses Hintergreifen (Raststellung) in der Kopplungsstellung zeigt die Schnittdarstellung in Fig. 10. Fig. 11 zeigt eine weitere perspektivische Darstellung der Anordnung aus den Fig. 5 und 6.

Wird das Einsteckbauteil 21 in der Stecköffnung 24 aus der Kopplungsstellung herausgedreht in eine Entkopplungsstellung, so werden die federnden Zungen 32, 33 nach innen gedrückt, derart, dass der jeweilige Rastvorsprung 34, 35 in eine Nicht-Raststellung gelangt (vgl. Fig. 5, 7 und 9), in welcher die Rastvorsprünge 34, 35 gegen die Innenfläche 39 der umgebenden Wandung 23 drücken und gegen diese vorgespannt sind. Dies entspricht einer Entkopplungsstellung, in welcher das Einsteckbauteil 21 aus der Einstecköffnung 24 herausgezogen werden kann.

Außenseitig sind an dem Einsteckbauteil 21 und der umgebenden Wandung 23 einander gegenüberliegende Rampenmechanismen 43 vorgesehen, bei denen infolge des Drehens des Einsteckbauteils 21 in der Stecköffnung 24 Rampen 43, 43b am Einsteckbauteil 21 und der Steckaufnahme 22 aufeinander gleiten. Wird das Einsteckbauteil 21 aus der Kopplungsstellung herausgedreht, erzwingen die Rampen ein Auseinanderbewegen von Einsteckbauteil 21 und Steckaufnahme 22 in axialer Richtung. Der Rampenmechanismus 43 ist mit einem Anschlag 44 gebildet, welcher die Relativdrehung von Einsteckbauteil 21 und der Steckaufnahme 22 in der Kopplungsstellung begrenzt.

Gemäß den Fig. 2 und 3 ist die Steckaufnahme 22 an einem Anschlussbauteil 44 gebildet, wobei die die Stecköffnung 24 umgebende Wandung 23 einstückig hieran angeformt ist. Das Anschlussbauteil 44, welches auch als Anschlussplatte mit einer gekrümmten Form gebildet sein kann, dient zum Aufsetzen und Montieren der Steckaufnahme 22, zum Beispiel an dem Verteilrohr 2 in Fig. 1. Das Anschlussbauteil 44 wird hierbei den Ausgängen 3 gegenüber montiert, beispielweise mittels Schraubverbindung. Alternativ kann das Anschlussbauteil 44 mit der Steckaufnahme 24 einstückig mit dem Verteilrohr 3 gebildet sein (nicht dargestellt).

Für eine gasdichte, insbesondere luftdichte Verbindung zwischen Einsteckbauteil 21 und Steckaufnahme 22 ist ein in den gezeigten Beispielen als O-Ring 45 ausgeführtes Dichtelement vorgesehen.

Fig. 12 zeigt eine schematische perspektivische Darstellung eines Blindstopfens 4, der vergleichbar dem Einsteckbauteil 21 in die Ausgänge 3 des Verteilers 1 aus Fig. 1 lösbar eingesteckt werden kann.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Verteilmaschine zum Ausbringen von granuliertem oder körnigem Material wie Dünger oder Saatgut, mit einem Transportsystem zum Transportieren eines Gasstroms, wobei das Transportsystem ein Schlauchanschlussvorrichtung aufweist, die Schlauchanschlussvorrichtung umfassend:
- eine Schlauchleitung (20) mit einem elastischen, formstabilen Schlauch, durch den ein Gasstrom transportiert wird;
- eine Steckaufnahme (22), bei der in einer umgebenden Wandung (23) eine Stecköffnung (24) angeordnet ist; und
- ein Einsteckbauteil (21) mit einem Durchbruch (38) zum Transportieren des Gasstroms, wobei das Einsteckbauteil (21) mit einem proximalen Endstück (31) in die Stecköffnung (24) einsteckbar ist und bei dem an einem distalen Endstück (25) ein Schlauchende des elastischen, formstabilen Schlauchs aufgenommen ist, wobei das proximale Endstück (31) wenigstens eine federnde Zunge (32; 33) mit einem Rastvorsprung (34; 35) aufweist;
wobei ein Rand (40) der die Stecköffnung (24) umgebenden Wandung (23) auf einer von dem Einsteckbauteil (21) abgewandten Seite eine Sattelform aufweist, derart, dass erste Randabschnitte (41 a; 41b), die sich entlang einer ersten gedachten, die Stecköffnung (24) kreuzenden Verbindungslinie gegenüberliegen, zurückversetzt sind gegenüber zweiten Randabschnitten (42a; 42b), die sich entlang einer zweiten gedachten, die Stecköffnung (24) kreuzenden Verbindungslinie, welche quer zur ersten gedachten Verbindungslinie verläuft, gegenüberliegen;
wobei das Einsteckbauteil (21), wenn das proximale Endstück (31) in die Stecköffnung (24) eingesteckt ist, zwischen einer Kopplungsstellung, in welcher der Rastvorsprung (34; 35) der federnden Zunge in einer Raststellung den Rand (40) im Bereich eines der ersten Randabschnitte (41a; 41b) hintergreift, und einer Entkopplungsstellung drehbar ist, in welcher die federnde Zunge (32; 33) nach Innen gedrückt ist, derart, dass der Rastvorsprung (34; 35) in einer Nicht-Raststellung zumindest teilweise auf einer der Stecköffnung (24) zugewandten Innenfläche (39) der umgebenden Wandung (23) im Bereich benachbart zu einem der zweiten Randabschnitte (42a, 42b) angeordnet und gegen die Innenfläche (39) vorgespannt ist; und
wobei ein Rampenmechanismus (43) mit einander zugeordneten Rampen (43a; 43b) an der Steckaufnahme (22) und dem Einsteckbauteil (21) vorgesehen ist, bei dem die Rampen (43a; 43b) zumindest beim mittels Relativdrehung von Steckaufnahme (22) und Einsteckbauteil (21) um eine Drehachse bewirkten Übergang von der Kopplungsstellung in die Entkopplungsstellung aufeinander gleiten und hierdurch Steckaufnahme (22) und Einsteckbauteil (21) in axialer Richtung der Drehachse auseinander bewegt werden.

2. Landwirtschaftliche Verteilmaschine nach Anspruch 1, **dadurch gekennzeichnet, dass** das proximale Endstück (31) in die Stecköffnung (24) formschlüssig einsteckbar ist.

3. Landwirtschaftliche Verteilmaschine nach Anspruch 1 oder 2, **dadurch gekennzeichnet, dass** das proximale Endstück (31) eine weitere federnde Zunge (32; 33) mit einem weiteren Rastvorsprung (34; 35) aufweist, wobei der weitere Rastvorsprung (34; 35) in der Kopplungsstellung den Rand (40) im Bereich des gegenüberliegenden der ersten Randabschnitte (41a; 41b) hintergreift, und die weitere federnde Zunge (32; 33) in der Entkopplungsstellung nach Innen gedrückt ist, derart, dass der weitere Rastvorsprung (34; 35) zumindest teilweise auf der der Stecköffnung (24) zugewandten Innenfläche (39) der umgebenden Wandung (23) im Bereich benachbart zu dem gegenüberliegenden zweiten Randabschnitten (42a; 42b) angeordnet und gegen die Innenfläche (39) vorgespannt ist.

4. Landwirtschaftliche Verteilmaschine nach mindestens einem der vorangehenden Ansprüche, **dadurch gekennzeichnet, dass** die Rampen (43a; 43b) an einem Rampenvorsprung und einer Rampenausnehmung gebildet sind.

5. Landwirtschaftliche Verteilmaschine nach mindestens einem der vorangehenden Ansprüche, **dadurch gekennzeichnet, dass** die Rampen (43a; 43b) im Bereich äußerer Oberflächen von Steckaufnahme (22) und Einsteckbauteil (21) angeordnet sind.

6. Landwirtschaftliche Verteilmaschine nach mindestens einem der vorangehenden Ansprüche, **dadurch gekennzeichnet, dass** die Rampe (43a) an dem Einsteckbauteil (21) im Bereich eines sich radial erstreckenden Überstands angeordnet ist.

7. Landwirtschaftliche Verteilmaschine nach mindestens einem der vorangehenden Ansprüche, **dadurch gekennzeichnet, dass** ein weiterer Rampenmechanismus mit einander zugeordneten weiteren Rampen an der Steckaufnahme (22) und dem Einsteckbauteil (21) vorgesehen ist, welcher auf einer gegenüberliegenden Seite von Steckaufnahme (22) und Einsteckbauteil (21) angeordnet ist.

8. Landwirtschaftliche Verteilmaschine nach mindestens einem der vorangehenden Ansprüche, **dadurch gekennzeichnet, dass** die die Stecköffnung (24) umgebenden Wandung (23) an ein Anschlussbauteil (44) angeformt ist, dessen Fläche sich quer zur Längsrichtung des Einsteckbauteils (21) erstreckt, und der Rand (40) auf einer von dem Einsteckbauteil (21) abgewandten Seite des Anschlussbauteils (44) ausgebildet ist.

9. Landwirtschaftliche Verteilmaschine nach Anspruch 8, **dadurch gekennzeichnet, dass** das Anschlussbauteil (44) auf einer von dem Einsteckbauteil (21) abgewandten Seite eine gekrümmte Oberfläche aufweist, die um eine sich quer zur Längsrichtung des Einsteckbauteils (21) erstreckende Achse gekrümmt ist.

10. Landwirtschaftliche Verteilmaschine nach Anspruch 8 oder 9, **dadurch gekennzeichnet, dass** die die Stecköffnung (24) umgebende Wandung (23) auf der von dem Einsteckbauteil (21) abgewandten Seite des Anschlussbauteils (44) wenigstens abschnittsweise übersteht und hierdurch der Rand zumindest teilweise durch einen Wandüberstand ausgebildet ist.

11. Landwirtschaftliche Verteilmaschine nach mindestens einem der vorangehenden Ansprüche, **dadurch gekennzeichnet, dass** das Einsteckbauteil (21) am distalen Endstück (25) innenseitig Schraubgewinde (29) aufweist, in welches das Schlauchende eingedreht ist.

12. Landwirtschaftliche Verteilmaschine nach mindestens einem der vorangehenden Ansprüche, **dadurch gekennzeichnet, dass** die federnde Zunge (32) und / oder die weitere federnde Zunge (33) von in Längsrichtung des Einsteckbauteils (21) verlaufenden Schlitzen (36) begrenzt sind, welche die federnde Zunge (32) und / oder die weitere federnde Zunge (33) von benachbarten Abschnitten (37) des proximalen Endstücks (31) trennen.

13. Landwirtschaftliche Verteilmaschine nach Anspruch 12, **dadurch gekennzeichnet, dass** der Rastvorsprung (34) und / oder der weitere Rastvorsprung (35) in Längsrichtung des Einsteckbauteils (21) gegenüber den benachbarten Abschnitten (37) des proximalen Endstücks (31) überstehen.

## Claims

1. An agricultural distributor machine for distributing a granular or grainy material such as fertiliser or seed, having a transport system for transporting a gas flow, wherein the transport system has a hose connection device, said hose connection device comprising:
- a hose line (20) having an elastic, dimensionally stable hose through which a gas flow is transported;
- a plug receptacle (22) in which a plug opening (24) is arranged in a surrounding wall (23); and
- a plug component (21) with an opening (38) for transporting the gas flow, wherein the plug component (21) can be inserted into the plug opening (24) with a proximal end portion (31) and wherein a hose end of the elastic, dimensionally stable hose is received at a distal end portion (25), wherein the proximal end portion (31) has at least one flexible tongue (32, 33) with a locking protrusion (34, 35);
wherein an edge (40) of the wall (23) surrounding the plug opening (24) has a saddle shape on one side facing away from the plug component (21), such that first edge sections (41a, 41b), which are opposite to each other along a first imaginary connecting line crossing the plug opening (24), are recessed relative to second edge sections (42a, 42b), which are opposite to each other along a second imaginary connecting line crossing the plug opening (24), which extends transversely to the first imaginary connecting line;
wherein, when the proximal end portion (31) is inserted into the plug opening (24), the plug component (21) can be rotated between a coupling position, in which the locking protrusion (34, 35) of the flexible tongue reaches behind the edge (40) in the area of one of the first edge sections (41a, 41b) in a locking position, and an uncoupling position, in which the flexible tongue (32, 33) is pushed inward, such that the locking protrusion (34, 35) in a non-locking position is arranged at least partially on an interior surface (39) of the surrounding wall (23) facing the plug opening (24) in the area adjacent to one of the second edge sections (42a, 42b) and is pre-tensioned against the interior surface (39); and
wherein a ramp mechanism (43) with ramps (43a, 43b) allocated to each other is provided on the plug receptacle (22) and the plug component (21), in which the ramps (43a, 43b) slide on top of each other at least during the transition from the coupling position to the uncoupling position effected by means of the rotation of the plug receptacle (22) relative to the plug component (21) about a rotational axis, thereby moving the plug receptacle (22) and the plug component (21) away from each other in the axial direction of the rotational axis.

2. The agricultural distributor machine according to Claim 1, **characterized in that** the proximal end portion (31) can be inserted into the plug opening (24) in a form-fitting manner.

3. The agricultural distributor machine according to Claim 1 or 2, **characterized in that** the proximal end portion (31) has an additional flexible tongue (32, 33) with an additional locking protrusion (34, 35), wherein the additional locking protrusion (34, 35) reaches behind the edge (40) in the area of that respective first edge section (41a, 41b) that lies opposite from it in a locking position, and wherein the additional flexible tongue (32, 33) is pushed inward in the uncoupling position, such that the additional locking protrusion (34, 35) is arranged at least partially on an interior surface (39) of the surrounding wall (23) facing the plug opening (24) in the area adjacent to that respective second edge section (42a, 42b) opposite from it and is pre-tensioned against the interior surface (39).

4. The agricultural distributor machine according to at least one of the preceding claims, **characterized in that** the ramps (43a, 43b) are formed on a ramp protrusion and a ramp recess.

5. The agricultural distributor machine according to at least one of the preceding claims, **characterized in that** the ramps (43a, 43b) are arranged in the area of exterior surfaces of the plug receptacle (22) and the plug component (21).

6. The agricultural distributor machine according to at least one of the preceding claims, **characterized in that** the ramp (43a) is arranged on the plug component (21) in the area of a radially extending overhang.

7. The agricultural distributor machine according to at least one of the preceding claims, **characterized in that** an additional ramp mechanism with additional ramps which are allocated to each other is provided on the plug receptacle (22) and the plug component (21), which ramp mechanism is arranged on an opposite side of the plug receptacle (22) and the plug component (21).

8. The agricultural distributor machine according to at least one of the preceding claims, **characterized in that** the wall (23) surrounding the plug opening (24) is moulded onto a connecting component (44) whose surface extends transversely to the longitudinal direction of the plug component (21) and that the edge (40) is designed on a side of the connecting component (44) facing away from the plug component (21).

9. The agricultural distributor machine according to Claim 8, **characterized in that** the connecting component (44) has a curved surface on a side facing away from the plug component (21), which surface is curved about an axis extending transversely to the longitudinal direction of the plug component (21).

10. The agricultural distributor machine according to Claim 8 or 9, **characterized in that** the wall (23) surrounding the plug opening (24) at least in portions extends beyond the side of the connecting component (44) facing away from the plug component (21), and that this results in the edge at least partially being formed by a wall overhang.

11. The agricultural distributor machine according to at least one of the preceding claims, **characterized in that** the plug component (21) has screw threads (29) on the interior of the distal end portion (25), into which threads the hose end is screwed.

12. The agricultural distributor machine according to at least one of the preceding claims, **characterized in that** the flexible tongue (32) and/or the additional flexible tongue (33) are delimited by slots (36) extending in the longitudinal direction of the plug component (21), which slots separate the flexible tongue (32) and/or the additional flexible tongue (33) from adjacent sections (37) of the proximal end portion (31).

13. The agricultural distributor machine according to Claim 12, **characterized in that** the locking protrusion (34) and/or the additional locking protrusion (35) extend further in the longitudinal direction of the plug component (21) relative to the adjacent sections (37) of the proximal end section (31).

## Revendications

1. Épandeur agricole pour l'épandage de matériaux granulaires ou granuleux tels de l'engrais ou des semences, avec un système de transport pour transporter un flux de gaz, dans lequel le système de transport présente un dispositif de raccordement de tuyau, le dispositif de raccordement de tuyau présentant :
- un tuyau flexible (20) avec un tuyau élastique indéformable à travers lequel un flux de gaz est transporté ;
- un logement d'enfichage (22) où une ouverture d'enfichage (24) est ménagée dans une paroi périphérique (23) ; et
- un composant enfichable (21) avec une trouée (38) pour transporter le flux de gaz, dans lequel le composant enfichable (21) peut être enfiché avec un embout proximal (31) dans l'ouverture d'enfichage (24) et où, au niveau d'un embout distal (25), une extrémité de tuyau du tuyau élastique indéformable est réceptionnée, dans lequel l'embout proximal (31) présente au moins une languette élastique (32 ; 33) avec une saillie d'encliquetage (34 ; 35) ;
dans lequel un bord (40) de la paroi (23) entourant l'ouverture d'enfichage (24) présente une forme de selle sur un côté tournant le dos au composant enfichable (21) de telle sorte que des premières parties de bord (41a ; 41b) qui sont situées de manière opposée le long d'une première ligne de liaison imaginaire croisant l'ouverture d'enfichage (24) sont décalées en arrière par rapport à des deuxièmes parties de bord (42a ; 42b) qui sont situées de manière opposée le long d'une deuxième ligne de liaison imaginaire croisant l'ouverture d'enfichage (24), laquelle s'étend perpendiculairement à la première ligne de liaison imaginaire ;
dans lequel, lorsque l'embout proximal (31) est enfiché dans l'ouverture d'enfichage (24), on peut faire tourner le composant enfichable (21) entre une position d'accouplement dans laquelle la saillie d'encliquetage (34 ; 35) de la languette élastique entoure par l'arrière le bord (40) dans la zone de l'une des premières parties de bord (41a ; 41b) dans une position d'encliquetage, et une position de désaccouplement dans laquelle la languette élastique (32 ; 33) est enfoncée vers l'intérieur de telle sorte que la saillie d'encliquetage (34 ; 35) est disposée, dans une position de non-encliquetage, au moins en partie sur une surface intérieure (39), tournée vers l'ouverture d'enfichage (24), de la paroi périphérique (23) dans la zone au voisinage de l'une des deuxièmes parties de bord (42a, 42b) et est précontrainte contre la surface intérieure (39) ; et
dans lequel un mécanisme à rampes (43), avec des rampes (43a ; 43b) associées entre elles, est prévu au niveau du logement d'enfichage (22) et du composant enfichable (21) avec lequel, au moins lors de la transition de la position d'accouplement à la position de désaccouplement provoquée au moyen d'une rotation relative entre le logement d'enfichage (22) et le composant enfichable (21) autour d'un axe de rotation, les rampes (43a ; 43b) glissent les unes sur les autres et de ce fait, le logement d'enfichage (22) et le composant enfichable (21) sont écartés l'un de l'autre en direction axiale de l'axe de rotation.

2. Épandeur agricole selon la revendication 1, **caractérisé en ce que** l'embout proximal (31) est enfichable par conjugaison de formes dans l'ouverture d'enfichage (24).

3. Épandeur agricole selon la revendication 1 ou 2, **caractérisé en ce que** l'embout proximal (31) présente une autre languette élastique (32; 33) avec une autre saille d'encliquetage (34 ; 35), dans lequel, dans la position d'accouplement, l'autre saillie d'encliquetage (34 ; 35) entoure par l'arrière le bord (40) dans la zone de celle des premières parties de bord (41a ; 41b) située en opposition et dans la position de désaccouplement, l'autre languette élastique (32 ; 33) est enfoncée vers l'intérieur de telle sorte que l'autre saillie d'encliquetage (34 ; 35) est disposée au moins en partie sur la surface intérieure (39), tournée vers l'ouverture d'enfichage (24), de la paroi périphérique (23) dans la zone au voisinage de celle des deuxièmes parties de bord (42a ; 42b) située en opposition et est précontrainte contre la surface intérieure (39).

4. Épandeur agricole selon l'une au moins des revendications précédentes, **caractérisé en ce que** les rampes (43a ; 43b) sont formées sur une saillie de rampe et un évidement de rampe.

5. Épandeur agricole selon l'une au moins des revendications précédentes, **caractérisé en ce que** les rampes (43a ; 43b) sont disposées dans la zone de surfaces extérieures du logement d'enfichage (22) et du composant enfichable (21).

6. Épandeur agricole selon l'une au moins des revendications précédentes, **caractérisé en ce que** la rampe (43a) est disposée sur le composant enfichable (21) dans la zone d'une projection s'étendant radialement.

7. Épandeur agricole selon l'une au moins des revendications précédentes, **caractérisé en ce qu'**un autre mécanisme à rampes avec d'autres rampes associées entre elles sur le logement d'enfichage (22) et le composant enfichable (21) est prévu, lequel est disposé sur un côté situé en vis-à-vis du logement d'enfichage (22) et du composant enfichable (21).

8. Épandeur agricole selon l'une au moins des revendications précédentes, **caractérisé en ce que** la paroi (23) entourant l'ouverture d'enfichage (24) est formée sur un élément de raccord (44) dont la surface s'étend transversalement à la direction longitudinale du composant enfichable (21), et que le bord (40) est réalisé sur un côté, tournant le dos au composant enfichable (21), de l'élément de raccord (44).

9. Épandeur agricole selon la revendication 8, **caractérisé en ce que** l'élément de raccord (44) présente, sur un côté tournant le dos au composant enfichable (21), une surface courbe qui est courbée autour d'un axe s'étendant transversalement à la direction longitudinale du composant enfichable (21).

10. Épandeur agricole selon la revendication 8 ou 9, **caractérisé en ce que** la paroi (23) entourant l'ouverture d'enfichage (24) fait saillie au moins par tronçons sur le côté, tournant le dos au composant enfichable (21), de l'élément de raccord (44) et que de ce fait, le bord est au moins partiellement réalisé par une projection de paroi.

11. Épandeur agricole selon l'une au moins des revendications précédentes, **caractérisé en ce que** le composant enfichable (21) présente, sur l'embout distal (25), du côté intérieur, un filetage (29) dans lequel l'extrémité du tuyau est vissé.

12. Épandeur agricole selon l'une au moins des revendications précédentes, **caractérisé en ce que** la languette élastique (32) et/ou l'autre languette élastique (33) sont délimitées par des fentes (36) s'étendant en direction longitudinale du composant enfichable (21), lesquelles séparent la languette élastique (32) et/ou l'autre languette élastique (33) de parties voisines (37) de l'embout proximal (31).

13. Épandeur agricole selon la revendication 12, **caractérisé en ce que** la saillie d'encliquetage (34) et/ou l'autre saillie d'encliquetage (35) font saillie en direction longitudinale du composant enfichable (21) par rapport aux parties voisines (37) de l'embout proximal (31).
